Europäisches Patentamt

European Patent Office

Office européen des brevets

(19)

(11) Publication number: **0 268 337**
**A1**

(12) # EUROPEAN PATENT APPLICATION

(21) Application number: 87202209.0

(22) Date of filing: 13.11.87

(51) Int. Cl.⁴: **H02M 1/084**

(30) Priority: 14.11.86 NL 8602895

(43) Date of publication of application:
**25.05.88 Bulletin 88/21**

(84) Designated Contracting States:
**AT BE CH DE ES FR GB GR IT LI LU NL SE**

(71) Applicant: **JOHNSON SERVICE COMPANY**
**5757 North Green Bay Avenue P.O. Box 591**
**Milwaukee, WI 53201(US)**

(72) Inventor: **Otter, Herman**
**Willem Lorestraat 132**
**NL-8921 CN Leeuwarden(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Apparatus for controlling the power supply of an inductive load.**

(57) Apparatus for controlling the electric power supply from a three-phase mains into an inductive load, comprising a controllable electronic switch means, one for each of the three phases, having an input for the respective phase, an output to said inductive load and an input for a control signal, a direction-of-current detector for at least one of said phases and connected into a shunt across said electronic switch means, an electronic synchronization signal-generator having an input for the output signal of the direction-of-current detector, and a control signal generator having an input for the synchronization signal and an input for a set signal for controlling said electric switch means. A delay means having an input for a zero crossing signal from one phase of the mains voltage and initiating with said zero crossing signal a predetermined time period, and a logical gate means having an input for the output signal of the direction-of-current detector and an input for the output signal of said delay means, and an output to the input of said electronic synchronization signal-generator makes the apparatus suitable for connection of either a star-connected or a delta-connected three-phase load.

FIG. 1

EP 0 268 337 A1

# Apparatus for controlling the power supply of an inductive load

The invention relates to an apparatus for controlling the electric power supply from a three-phase mains into an inductive load, comprising a controllable electronic switch means, one for each of the three phases, having an input for the respective phase, an output to said inductive load and an input for a control signal, a direction-of-current detector for at least one of said phases and connected into a shunt across said electronic switch means, an electronic synchronization signal-generator having an input for the output signal of the direction-of-current detector, and a control signal generator having an input for the synchronization signal and an input for a set signal for controlling said electric switch means.

Such an apparatus is known for controlling the number of revolutions of a three-phase electric motor of the induction type by means of a control signal. In the known apparatus, each of the three-phase parts of the motor is controlled by separate electronic switches in order to synchronously feed the rotary magnetic field of the induction motor. As a result, the motor runs silently and is free of vibrations, and heat dissipation remains limited. In a star-connected motor the electric current flows from a phase conductor of the mains through the respective electronic switch and a motor winding to the neutral conductor of the three-phase mains. On the other hand, in a delta-connected motor as known, electric current flows from a phase conductor of the mains through the respective electronic switch and a motor winding to another phase conductor of the mains. The electronic switches have been included in a delta-connection. Six conductors are required for connecting the motor to the known controlling apparatus.

It is an object of the invention to make the apparatus of the type as described in the introduction suitable for connection without neutral conductor of a star-connected three-phase load, and for connection of a three-phase delta-connected load also using only three conductors between apparatus and load. When attaining this object is has appeared necessary that the electronic switches are actually received in the phase conductors and not between phase and zero conductors or between two phase conductors, respectively. As a result, any phase current flows through two or three electronic switches. The output signal of the direction-of-current detector is thus affected by a current or currents initiated in the other phase or phases, respectively. This explains why the application of a direction-of-current detector in addition to correct reference signals also yields erroneous reference signals, interfering with the generation of the synchronization signal and introducing errors in the energy supply to the load.

The invention is based upon the following inventive notion:

The voltage across an electronic switch in a predetermined phase conductor of which the direction-of-current detector makes use, is affected by switching actions of electronic switches in the other phase conductors. The effect of an electronic switch in one particular other phase conductor (phase R affected by phase T, phase S by phase R and phase T by phase S) and within a certain time interval can be so considerable that the direction-of-current detector emits erroneous current zero crossing signals. Said time interval is at about 33° after the rising voltage zero crossing of the phase in question with respect to the zero conductor. The duration of the interval corresponds to about 15° of a cycle.

According to the invention the apparatus of the type described in the introduction is characterized by a delay means having an input for a zero crossing signal from one phase of the mains voltage and initiating with said zero crossing signal a predetermined time period, and a logical gate means having an input for the output signal of the direction-of-current detector and an input for the output signal of said delay means, and an output to the input of said electronic synchronization signal-generator.

The predetermined period is a function of the mains frequency; the time period also represents a certain phase-angle.

According to an example of a preferred embodiment the apparatus according to the invention is furthermore characterized in that said zero crossing signal is the voltage zero crossing signal that is derived from the output signal of a voltage polarity detector in a branch of a star connection between the inputs for the mains voltage of the respective electronic switches.

According to a further embodiment the apparatus according to the invention is characterized in that the zero crossing signal is derived from the output signal of the direction-of-current detector.

The electronic switches in the apparatus according to the invention are preferably implemented with a semi-conductor switch of the TRIAC type.

The embodiments will be elucidated hereafter in a description with references to the invention.

Fig. 1 shows a schematic representation of the preferred embodiment of the apparatus according to the invention.

Fig. 2 shows a variant of a portion of the apparatus according to the invention as shown in fig. 1.

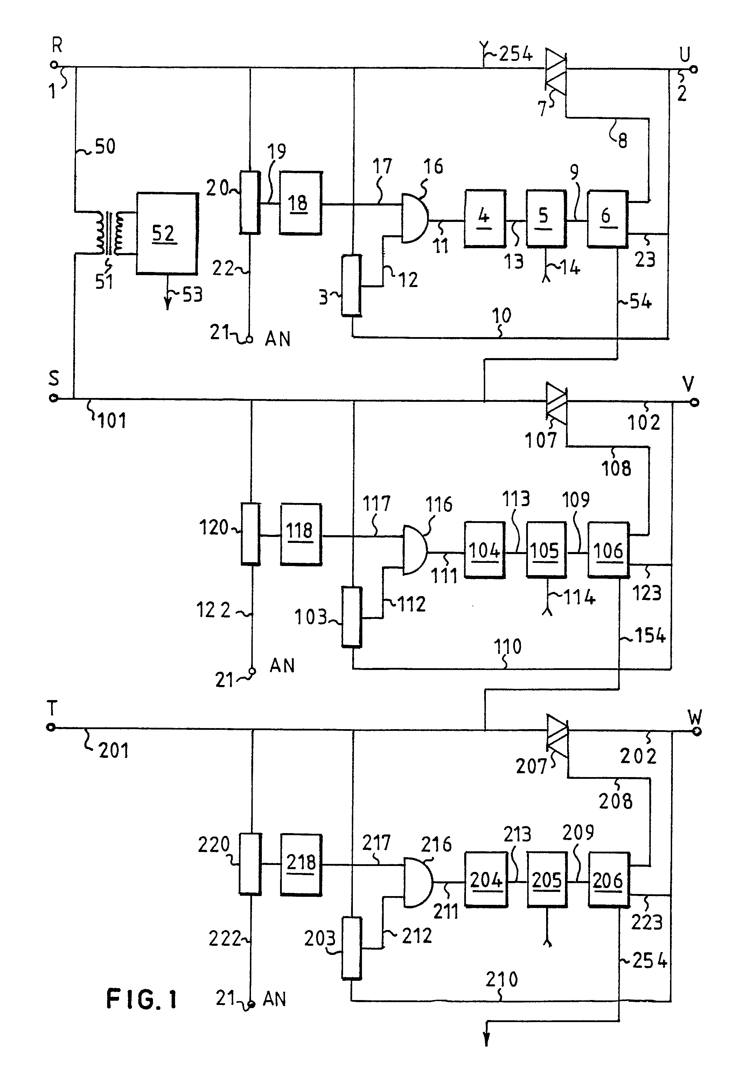

Fig. 1 shows the preferred embodiment of the apparatus according to the invention. The three phases of the mains can be connected to terminals R, S and T, respectively. The connection of an inductive load takes place at the terminals U, V and W, respectively. The apparatus provides a similar construction for each of the Phases. The electronic circuits require a power supply that has no electrically conductive junctions with the phases. Therefore there is one single power supply provided for the three electronic circuits, deriving energy through a transformer 51 from a lead 50 connected between the phase terminals R and S.

Equally insulated from the electronic switches a star connection has been established between the three phases with branches 22, 122 and 222, determining an artificial zero point 21 (AN). A voltage polarity detector 20, 120, 220 in each of the respective branches tracks the polarity of the voltage in the phase conductor and the output signal of the detector 20, 120, 220 is thus an indication of the zero crossing of the voltage in the phase conductor.

A second zero crossing signal can be derived from a direction-of-current detector 3, 103, 203 that has been included parallel to the electronic switch 6, 7; 106, 107; 206, 207 in a shunt 10, 110, 210 of the pertaining phase conductor. Due to the inductive load across the terminals U, V and W the zero crossing signal that is derived from the phase voltage generally leads that of the phase current. The distance in time between the zero crossing signals is dependent on the cos phi of the load.

In the preferred embodiment of the apparatus according to the invention the voltage zero crossing signal originating from the voltage polarity detector 20 is fed through the output 19 of the detector 20 to a monostable multivibrator 18 in which it starts an event determining a time period the end of which is passed on via an output 17 to an input of an AND gate 16. A second input 12 of the AND gate 16 receives the current zero crossing signal derived from the direction-of-current detector 3, so that at the input 11 of an electronic synchronization signal generator 4 a start signal appears the moment the event determining the time period in the multivibrator 18 has ended and the direction-of-current detector 3 emits the current zero crossing signal. The time period begins with the voltage zero crossing signal and continues to up to 40° of a cycle. Thus it is achieved that the current zero crossing signal is blocked during a time period in which erroneous current zero crossing signals can occur.

The synchronization signal activates the input 13 of a control signal generator 5. at the input 14 of which and from power supply 52 a setting voltage can be provided which determines the point of time at which after activation a control signal is emitted to the input 9 of the insulation stage 6 which keeps the electronic power current switch 7. such as a TRIAC, galvanically separated from the rest of the electronic circuit. The insulation is e.g. established by means of an opto-electronic coupling such as also may be case in the detectors 20 and 3. The insulation stage 6 is fed from phase S through a connection lead 54. A lead 23 serves to automatically switch ON the TRIAC 7 used in the electronic switch in each cycle after the polarity of the voltage has changed.

In such a way an accurate control of the electronic switch is established taking into account the inductive load in which the switched power is disspated.

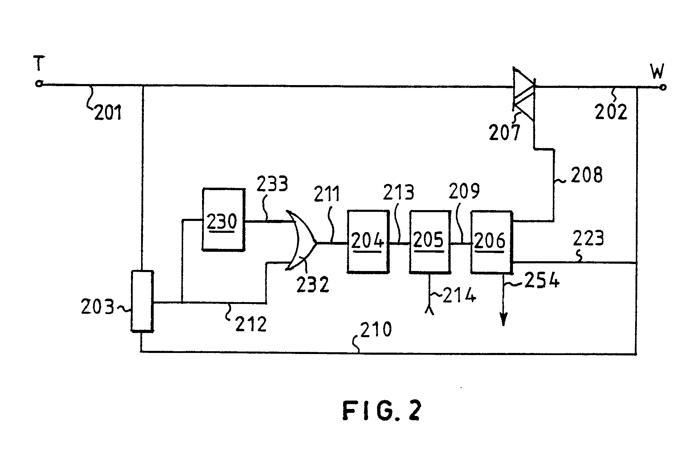

In a variant of the apparatus according to the invention as partially shown in fig. 2 in which similar reference numerals refer to similar parts in fig. 1, the output 212 of the direction-of-current detector 203 both is connected both direct and through a memory 230 to an input of an OR-gate 232, the output of which is connected to input 211 of the electronic synchronization signal generator 204. The memory 230 preferably has the form of a monostable timing element that returns to the stable non-active state after a certain period of time has lapsed. The certain period of time should minimally correspond with the time period in which errors can arise, practically 15° of a cycle, so that erroneous current zero crossing signals are eliminated. The apparatus includes for each of the phases R, S and T a circuit as shown in fig. 2 for phase T.

## Claims

1. Apparatus for controlling the electric power supply from a three-phase mains into an inductive load, comprising a controllable electronic switch means. one for each of the three phases, having an input for the respective phase, an output to said inductive load and an input for a control signal, a direction-of-current detector for at least one of said phases and connected into a shunt across said electronic switch means, an electronic synchronization signal-generator having an input for the output signal of the direction-of-current detector, and a control signal generator having an input for the synchronization signal and an input for a set signal for controlling said electric switch means, **characterized by** a delay means having an input for a zero crossing signal from one phase of the mains voltage and initiating with said zero crossing signal a predetermined time period, and a logical gate means having an input for the output signal of the direction-of-current detector and an input for the output signal of said delay means, and an output to the input of said electronic synchronization signal-generator.

2. Apparatus according to claim 1, **characterized** in that said zero crossing signal is the voltage zero crossing signal that is derived from the output signal of a voltage polarity detector in a branch of a star connection between the inputs for the mains voltage of the respective electronic switches.

3. Apparatus according to claim 1, **characterized in that** the zero crossing signal is derived from the output signal of the direction-of-current detector.

4. Apparatus according to claim 3, **characterized in that** said delay means comprises a memory means for holding the output signal of the direction-of-current detector during said predetermined time period, and in that said logical gate means comprises a logical OR-gate, the output signal of the direction-of-current detector and the output signal of said delay means being supplied to said OR-gate.

5. Apparatus according to any of the foregoing claims, **characterized in that** each of the electronic switch means comprises a TRIAC-type semiconductor switch.

FIG.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 611 097 (GENERAL ELECTRIC) * Column 2, line 16 - column 9, line 32 * | 1,2,4,5 | H 02 M 1/084 |
| Y | | 3 | |
| Y | FR-A-2 339 988 (BORG-WARNER) * Page 2, line 31 - page 3, line 6 * | 3 | |

TECHNICAL FIELDS SEARCHED (Int. Cl.4)

H 02 M 1/00
H 02 M 5/00

The present search report has been drawn up for all claims

| Place of search | Date of completion of the search | Examiner |
|---|---|---|
| THE HAGUE | 29-01-1988 | BERTIN M.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)